# EUROPÄISCHE PATENTSCHRIFT

(11) **EP 0 930 963 B1**
(45) Veröffentlichungstag und Bekanntmachung des Hinweises auf die Patenterteilung: **31.05.2000**
(21) Anmeldenummer: 97910258.9
(22) Anmeldetag: 04.10.1997
(51) Int. Cl.: B30B 15/28, B30B 1/08, F16P 3/16

(54) **SICHERHEITSEINRICHTUNG AN UMFORMMASCHINEN**
SAFETY DEVICE ON METAL-FORMING MACHINE TOOLS
DISPOSITIF DE SECURITE SITUE SUR DES MACHINES-OUTILS TRAVAILLANT LE METAL PAR FORMAGE

(30) Priorität: 12.10.1996 DE 19642204
(43) Veröffentlichungstag der Anmeldung: 28.07.1999
(73) Patentinhaber: Telegärtner Gerätebau GmbH, 01774 Höckendorf (DE)
(72) Erfinder: WAGNER, Ingo, D-01738 Dorfhain (DE); WOLF, Horst, D-01774 Pretzschendorf (DE)
(74) Vertreter: Schmidt, Ursula, Dipl.-Ing. (FH)
(86) Internationale Anmeldenummer: DE9702289
(87) Internationale Veröffentlichungsnummer: WO9816371

(56) Entgegenhaltungen:
- EP-A- 0 752 307
- DE-C- 949 919
- FR-A- 1 333 415
- GB-A- 2 070 512
- GB-A- 2 177 957
- US-A- 3 783 662
- US-A- 4 453 455

## Beschreibung

Die Erfindung betrifft eine Sicherheitseinrichtung an Umformmaschinen, insbesondere an pneumatischen Preßmaschinen und bei Durchführung kurzhubiger Preßvorgänge, zur Verhinderung des Eingreifens in den Gefahrenbereich während der Arbeitsbewegung des Werkzeuges und zur Unterbindung unbeabsichtigter Schließbewegungen bei Einsatz von Werkstücken, wobei die Maschine im wesentlichen aus einem Maschinengehäuse, einer Einrichtung zur Krafterzeugung, einer Steuerung und einer Werkzeuganordnung mit festem und beweglichem Teil und dem damit verbundenen eigentlichen Umformwerkzeug besteht.

Eine solche Einrichtung ist aus FR 1 333 415 A bekannt.

Die EG-Maschinenrichtlinie legt fest, welche Regeln und Normen einzuhalten sind, um weitestgehende Arbeitssicherheit beispielsweise an Preßmaschinen zu erzielen. Hiernach ist ein Handschutz insbesondere dadurch erreichbar, daß nur sichere Werkzeuge eingesetzt werden, daß die Gefahrenstelle abgeschirmt wird, daß Zweihandschaltungen oder berührungslos wirkende Schutzeinrichtungen, z.B. Lichtschranken, angewendet werden.

Solcherart Sicherheitseinrichtungen sind in vielfachen Ausführungsformen bekannt und auf die jeweiligen Einsatzbedingungen genau abgestimmt. Allerdings hat es sich herausgestellt, daß diese Sicherheitseinrichtungen nicht in jedem Fall einsetzbar sind oder aber nur mit einem gewissen Restrisiko angewendet werden können.

So ist es beispielsweise bei der Herstellung von mit Kabeln bestückten Steckverbindern, d.h. bei der Festlegung von Kabeln in Steckverbindern, üblich, die Außen- und/oder Innenleiter durch einen Crimpvorgang miteinander zu verbinden. Bei kleineren Kabelquerschnitten ist eine Crimpzange hierfür hilfreich, die von Hand bedient werden kann und daher wenig Verletzungsgefahr in sich birgt. Dennoch ist das Crimpen von Hand gesundheitsschädigend, insbesondere dann, wenn dieser Vorgang ständig wiederholt werden muß.

Daher werden auch für das Anschließen von elektrischen Kabeln oder Leitungen mit verhältnismäßig kleinem Querschnitt pneumatische Pressen eingesetzt, um den Montagekräften die Arbeit zu erleichtern.

Bekannte Sicherheitsvorrichtungen mit Zweihandbedienung können hier nicht verwendet werden, da zum Herstellen der Anschlüsse beide Hände auch während des Preßvorganges zum Festhalten der Verbindungselemente benötigt werden. Das heißt, der Bediener solch einer Presse muß, bevor und während der Kraftschluß hergestellt wird, mit einer Hand die Teile des Steckverbinders und mit der anderen Hand das eingefügte Kabel festhalten, da sonst die elektrische und auch die mechanische Verbindung zwischen Kabel und Stecker entweder fehlerhaft oder schadhaft erfolgt. Schlimmstenfalls kann es zur Zerstörung von Anschlußteilen kommen.

Elektrische oder elektronische Sicherheitsvorrichtungen sind oft störanfällig und bieten nicht in jedem Falle hundertprozentige Sicherheit.

Es ist deshalb Aufgabe der Erfindung, eine Sicherheitseinrichtung vorbenannter Art zu schaffen, die im wesentlichen auf mechanischen Prinzipien beruht und die trotz Verbleibens der Hände in Gefahrenbereichnähe mit hoher Sicherheit Verletzungsgefahren ausschließt.

Erfindungsgemäß wird die Aufgabe dadurch gelöst, daß die Sicherheitseinrichtung aus einem zwischen einem Führungsteil und einem Gegenlager angeordneten hebelartigen Teil besteht, das sowohl mit der Einrichtung zur Krafterzeugung als auch mit dem beweglichen Teil des Werkzeuges verbunden ist und das Führungsteil und das Gegenlager mit dem hebelartigen Teil gesteuert zusammenwirken, so daß jeder Arbeitshub des beweglichen Teils zweistufig erfolgt, zunächst als Bewegungshub in eine vorgegebene Position und nachfolgend als Krafthub zur Ausführung des eigentlichen Umformvorganges, der nur dann erfolgt, wenn kein Hindernis im Zwischenraum zwischen beweglichem Teil und Werkstück vorhanden ist.

Mit dieser erfindungsgemäßen Sicherheitseinrichtung wird erreicht, daß auch solche Umformvorgänge, die das Benutzen beider Hände für den jeweiligen Vorgang erfordern, ebenso sicher und unfallfrei durchgeführt werden können, wie beispielsweise solche Arbeitsgänge, bei denen Unfallschutz durch Zweihandbedienung erfolgt.

Die Sicherheitseinrichtung greift nur dann in den unmittelbaren Arbeitsablauf ein, wenn sich ein Fremdkörper im Arbeitsbereich befindet. Der Umformvorgang wird in diesem Falle bereits während des Bewegungshubes unterbrochen und das bewegliche Teil der Werkzeuganordnung kehrt in seine Ausgangsstellung zurück. Der Vorgang kann nachfolgend ohne weiteres erneut gestartet werden. Weder der Bediener der Maschine ist unfallgefährdet noch besteht die Gefahr des Beschädigens beziehungsweise Zerstörens von Maschinenteilen oder Werkstücken. Die Sicherheitseinrichtung gewährleistet ein schnelles, einfach zu handhabendes Bedienen der Maschine auch nach Unterbrechung des Vorganges infolge Wirksamwerdens der Sicherheitseinrichtung.

Die Einwirkung der maximalen Druckkraft erfolgt erst dann, wenn sie für den Umformvorgang tatsächlich notwendig ist und nicht schon während des gesamten Weges, den das bewegliche Teil zur Durchführung des Umformvorganges zurücklegen muß.

Nach einer vorzugsweisen Ausführungsform der Erfindung ist das hebelartige Teil so ausgebildet, daß es gleichzeitig der Kraftübersetzung bei Auslösung des Krafthubes dient.

Damit ist das hebelartige Teil sowohl Funktionselement der Sicherheitseinrichtung als auch Funktionselement der Preßmaschine an sich. Dadurch vereinfacht sich der konstruktive Aufbau der Maschine.

Während des Bewegungshubes führen, bedingt durch die Anordnung des hebelartigen Teils, Kolbenstange und bewegliches Teil die gleiche vertikale Bewegung aus, während bei Ausübung des Krafthubes das bewegliche Teil einen gegenüber dem kolbenstangenseitigen Ende des hebelartigen Teils wesentlich geringere vertikale Bewegung ausführt. Dadurch verstärkt sich die Druckkraft beim Preßvorgang wesentlich.

Bei einer weiteren vorteilhaften Ausführung der Sicherheitseinrichtung ist die Einrichtung zur Krafterzeugung vorzugsweise als pneumatische Einrichtung ausgebildet, mit deren Kolbenstange das hebelartige Teil verdrehbar verbunden ist. Dabei ist eine Seitenwand des Maschinengehäuses als Führungsteil ausgebildet und an der gegenüberliegenden Seitenwand ist ein Gegenlager angeordnet.

Besonders aus Kostengründen ist der Einsatz von pneumatischen Krafterzeugungseinrichtungen von Vorteil. Es können aber ebenso auch hydraulische oder elektrische Einrichtungen eingesetzt werden.

Wenn das hebelartige Teil der Sicherheitseinrichtung verdrehbar mit der Kolbenstange des Pneumatikzylinders verbunden ist, so wird gewährleistet, daß das hebelartige Teil im Normalfall, das heißt zumindest während des Bewegungshubes, die gleichen Bewegungen in vertikaler Richtung ausführt wie die Kolbenstange. Dabei gleitet es mit seinem kolbenstangenseitigen Ende entlang der Führungsfläche des Führungsteils, während das andere Ende des hebelartigen Teils ohne Berührung des Gegenlagers mitgeführt wird.

Nach einer vorzugsweisen Ausführungsform ist das Gegenlager vertikal verschiebbar im Gehäuse befestigt und über einen Teilbereich mit einer Verzahnung und einer sich unterhalb der Verzahnung befindlichen nutförmigen Aussparung ausgestattet.

Dabei ist die Position des Gegenlagers im Gehäuseinneren abhängig von der Größe des Abstandes zwischen beweglichem und festem Teil des Werkzeuges vor Auslösung des Krafthubes.

Zunächst wird erfindungsgemäß der Bewegungshub dadurch beendet, daß das hebelartige Teil durch Gleiten in die nutförmige Aussparung im Gegenlager und Aufsitzen auf einem rollenartigen Element des beweglichen Teils seine Endstellung in der ersten Stufe des Arbeitshubes erreicht hat.

Dadurch, daß das Gegenlager im Gehäuse verschiebbar angeordnet ist, kann jederzeit die genaue Position des Gegenlagers insbesondere bezüglich des Abstandes des oberen Endes der nutförmigen Aussparung zur Werkstückhöhe genau eingestellt werden, da diese Position wichtig ist für die Funktion der Preßmaschine.

Der Bewegungshub muß in dem Moment beendet werden, wenn das bewegliche Teil seine vorgegebene Position zum festen Teil beziehungsweise zum Werkstück erreicht hat. Dies geschieht dadurch, daß das hebelartige Teil in die nutförmige Aussparung eintaucht und auf dem rollenartigen Element des beweglichen Teils aufsitzt, so daß das rollenartige Element als Gegenlager zum Anschlag, den das obere Ende der Längsnut bildet, wirkt.

Bei Einsatz unterschiedlich großer Werkstücke ist es daher notwendig, das Gegenlager in seiner Position zum Werkstück genau zu justieren.

Die Verzahnung des Gegenlagers ist während eines normalen Arbeitsablaufes, das heißt, wenn sich kein Hindernis im Arbeitsbereich befindet, funktionslos.

Nach einer vorzugsweisen Fortbildung der erfindungsgemäßen Lösung sitzt das bewegliche Teil in der Endstellung des Bewegungshubes und vor Auslösung des Krafthubes auf dem Werkstück auf.

Damit wird sichergestellt, daß vor Auslösung des Krafthubes, also vor Auslösung des eigentlichen Umformvorganges, der Abstand zwischen beiden Werkzeugteilen so gering wie möglich ist, so daß kein Fremdkörper im Arbeitsbereich vorhanden sein kann. Der maximal notwendige Abstand zwischen beweglichem und festem Teil vor Auslösung des Krafthubes wird demnach lediglich von der Werkstückhöhe vorgegeben.

Bei einer weiteren Fortbildung der Erfindung ist an dem Ende des hebelartigen Teils, das zum Gegenlager ragt, eine Verzahnung ausgebildet, mit der das hebelartige Teil bei Nichterreichen der Endposition des Bewegungshubes infolge eines Hindernisses im Arbeitsbereich des Werkzeuges in die Verzahnung des Gegenlagers eingreift und zwischen Gegenlager und Führungsteil verklemmt.

Der Bewegungshub wird bereits vor Erreichen seiner Endstellung unterbrochen, so daß das Auslösen des Krafthubes zuverlässig unterbunden wird.

Von Vorteil ist, wenn das hebelartige Teil und das bewegliche Teil federnd miteinander verbunden sind.

Schon mit Beginn des Eingreifens der Zähne des hebelartigen Teils in die Verzahnung des Gegenlagers wird der Bewegungshub unterbrochen. Die federnde Befestigung beider Teile miteinander verhindert, daß die weitere Abwärtsbewegung der Kolbenstange auf das Hindernis übertragen wird, da der vertikale Abstand ab Beginn des gegenseitigen Eingreifens der Zähne bis zum vollständigen Ineinandergreifen vom Federelement abgefangen wird. Erst das vollständige Ineinandergreifen der Verzahnung bewirkt das Verklemmen des hebelartigen Teils zwischen dem Führungsteil und dem Gegenlager.

Die Blockierung des ausgelösten Arbeitshubes wird dadurch unterstützt, daß der innere Abstand zwischen den Führungsteilen im Bereich der Verzahnung kleiner ist als die Länge des hebelartigen Teils.

Trotz weiteren Einströmens von Druckluft in den Pneumatikzylinder wird die Kolbenstange durch das Verklemmen des hebelartigen Teils am weiteren Abwärtsbewegen gehindert. Die Steuerung sichert, daß sich die Luftrichtung umkehrt. Das hat zur Folge, daß sich die Kolbenstange und mit ihr das hebelartige Teil und das bewegliche Teil des Werkzeuges wieder zurück in die Ausgangsstellung bewegen. Es kommt nicht zur Auslösung des Krafthubes.

Nach einer anderen vorteilhaften Ausgestaltung der erfindungsgemäßen Sicherheitseinrichtung ist am kolbenstangenseitigen Ende des hebelartigen Teils ein Auslöseteil befestigt, das in der Endposition des Bewegungshubes mit einer Anordnung zur Auslösung des Krafthubes zusammenwirkt.

Das heißt, nur dann, wenn die Endposition des Bewegungshubes erreicht ist, wird sichergestellt, daß der Krafthub eingeleitet wird und der Umformvorgang erfolgt.

Eine einfache und kostengünstige Ausführungsform ist, wenn die Anordnung zur Auslösung des Krafthubes aus einem induktiven Näherungssensor besteht, der so im Gehäuse angeordnet ist, daß er mit dem Auslöseteil nur dann zusammenwirkt, wenn das hebelartige Teil in die nutförmige Aussparung im Gegenlager eingetaucht ist.

Mit dem Eintauchen des hebelartigen Teils in die nutförmige Aussparung ist der Bewegungshub abgeschlossen und der Krafthub eingeleitet. Das Auslöseteil hat den Näherungssensor erreicht. Dies geschieht dadurch, daß die Druckluftzufuhr im Zylinder nicht unterbrochen wird und die Kolbenstange sich trotz Beendigung des Bewegungshubes des beweglichen Teils noch etwas vertikal nach unten bewegen kann, so daß das Auslöseteil den Näherungssensor erreicht, der der Steuerung die Auslösung des Krafthubes signalisiert.

Zur Überwachung des Druckluftaufbaus im Pneumatikzylinder ist ein Drucksensor angeordnet, der mit dem induktiven Näherungssensor über die Steuerung zusammenwirkt.

Damit wird auf technisch einfache Art und Weise sichergestellt, daß nur der Arbeitsdruck im Pneumatikzylinder aufgebaut wird, der auch tatsächlich notwendig ist.

Eine vorteilhafte Ausführung gewährleistet, daß der Druckluftzylinder durch Anordnung des Drucksensors für den Bewegungshub nur ca. 50% des zur Verfügung stehenden Arbeitsdrukkes und erst bei ausgelöstem Krafthub den vollen Arbeitsdruck bereitstellt.

Die erfindungsgemäße Vorrichtung sichert, daß bei Vorhandensein eines Hindernisses im unmittelbaren Arbeitsbereich des Umformwerkzeuges der ausgelöste Arbeitshub während des Bewegungshubes abgebrochen wird und das bewegliche Teil und das hebelartige Teil in die Ausgangsstellung zurückgeführt werden. Durch Betätigen des Fußschalters kann nach Entfernen des Fremdkörpers aus dem unmittelbaren Arbeitsbereich des Werkzeuges der Umformvorgang wiederholt werden.

Damit werden Unfälle durch Nichtachtsamkeit völlig ausgeschlossen.

Die Erfindung soll nachfolgend anhand einer Crimpmaschine zum Anschließen von elektrischen Kabeln an Steckverbinder näher erläutert werden. Die dazugehörige Zeichnung zeigt in
- Fig. 1: eine prinzipielle Darstellung der Crimpmaschine als Schnittdarstellung in Seitenansicht und bei Ruhestellung der Maschine,
- Fig. 2: die Crimpmaschine nach Fig. 1 im Zustand der Beendigung des Bewegungshubes und vor Auslösung des Krafthubes,
- Fig. 3: die Crimpmaschine nach Fig. 1 im Zustand des gerade aktivierten Näherungssensors bei Auslösung des Krafthubes,
- Fig. 4: die Crimpmaschine nach Fig. 1 in seiner Endstellung, das heißt nach der Ausführung des Crimpvorganges und
- Fig. 5: die Crimpmaschine nach Fig. 1 bei vorhandenem Fremdkörper im unmittelbaren Arbeitsbereich.

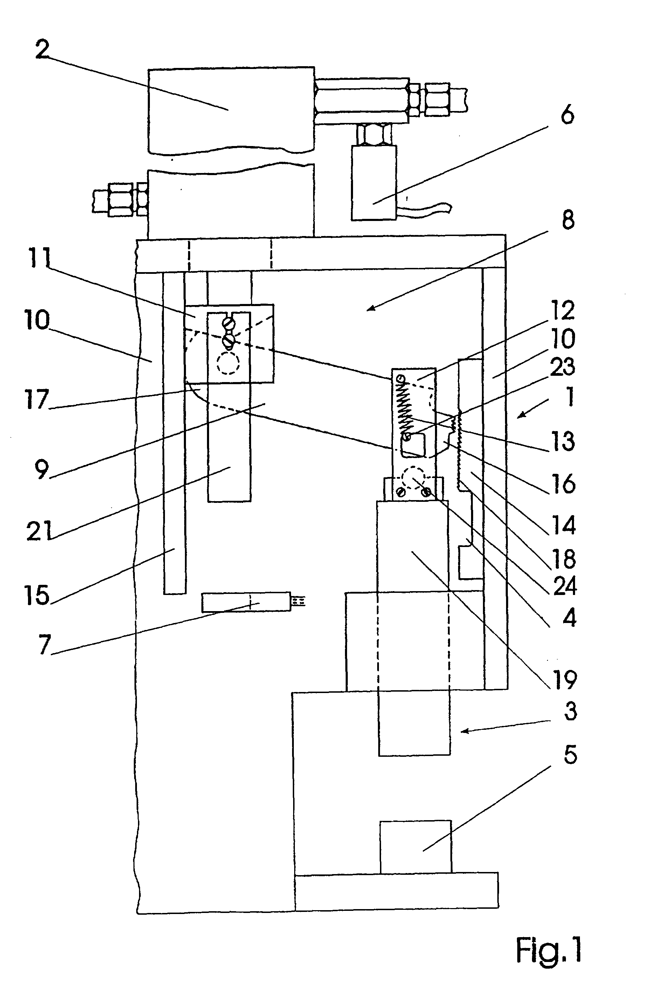

Nach Fig. 1 besteht die Crimpmaschine im wesentlichen aus dem Gehäuse 1, der Krafterzeugungseinrichtung in Form eines Druckluftzylinders 2, einer in der Zeichnung nicht dargestellten Steuervorrichtung, der Werkzeuganordnung 3, bestehend aus einem oberen beweglichen Teil 4, einem unteren festen Teil 5 und dem damit verbundenen eigentlichen Crimpwerkzeug, das in der Zeichnung ebenfalls nicht angegeben ist. In das auf dem festen Teil 5 angeordneten Teil des Crimpwerkzeuges wird das Werkstück (in der Zeichnung nicht dargestellt) auf- oder eingelegt. Die Crimpmaschine weist des weiteren einen Drucksensor 6 zur Überwachung des Arbeitsdruckes im Druckluftzylinder 2, eine Sensoranordnung 7 und die erfindungsgemäße Sicherheitseinrichtung 8 zur Verhinderung von Arbeitsunfällen durch nicht sachgerechte Bedienung der Maschine auf.

Die Crimpmaschine wird durch einen Fußschalter bedient, der in der Zeichnung ebenfalls nicht dargestellt ist. Die Fußbedienung ist erforderlich, da beide Hände benötigt werden, um den Crimpvorgang ordnungsgemäß und sicher durchführen zu können. Dazu ist es notwendig, daß mit einer Hand der Steckverbinder festgehalten werden muß, während die andere Hand das in die Crimphülse und das Innere des Steckverbinders eingeführte Anschlußkabel führt. Dabei befinden sich beide Hände auch während der Durchführung des Crimpvorganges in unmittelbarer Nähe des Arbeitsbereiches, so daß bei geringster Unaufmerksamkeit die Gefahr des Einquetschens eines oder mehrerer Finger gegeben ist. Es besteht demzufolge ein erhöhtes Unfallrisiko, dem auf zuverlässige Art und Weise mit Hilfe der Sicherheitseinrichtung 8, die im Gehäuseinneren der Crimpmaschine angeordnet ist, begegnet werden kann.

Die Sicherheitseinrichtung 8 besteht aus einem hebelartigen Teil 9, das in seiner Ausgangsstellung schräg nach unten geneigt zwischen zwei sich gegenüberliegenden Gehäusewänden 10 angeordnet ist. Dabei ist es einerseits verdrehbar mit der Kolbenstange 11 des Pneumatikzylinders 2 verbunden und ragt andererseits bis zur gegenüberliegenden Gehäusewand 10. Das hebelartige Teil 9 ist am beweglichen Teil 4 mittels eines bolzenartigen Elementes 23, das federnd mit einem oberen Führungselement 12 des beweglichen Teils 4 verbunden ist, befestigt, so daß bei entsprechender Ausbildung der Feder 13 der weitere Bewegungshub der Kolbenstange 11 bis zum vollständigen Eingreifen der Verzahnung 16, 18 im Gefahrenfall abgefangen werden kann.

Zur Sicherheitseinrichtung 8 gehören des weiteren ein an einer Gehäuseinnenwand 10 angeordnetes Gegenlager 14 und ein diesem gegenüberliegendes Führungsteil 15. Dabei ist das Gegenlager 14 so an der Innenwand 10 des Gehäuses 1 befestigt, daß es in seine genaue Position justiert werden kann. Die genaue Position ist dabei abhängig von der Höhe der Crimphülse beziehungsweise vom Abstand zwischen beweglichem Teil 4 und festem Teil 5 nach Erreichen der Endstellung 20 des Bewegungshubes. Um diesen Abstand so gering wie möglich zu halten, ist der Bewegungshub so eingestellt, daß das bewegliche Teil 4 in der Endstellung des Bewegungshubes auf der Crimphülse aufsitzt.

Das Führungsteil 15 besitzt eine solche Größe und ist so ausgebildet, daß das hebelartige Teil 9 mit seinem einen Ende 17 an dessen Innenfläche entlanggleiten oder sich im Gefahrenfall zwischen Führungsteil 15 und Gegenlager 14 verklemmt. Dazu ist der Abstand zwischen Gegenlager 14 und Führungsteil 15 so gewählt, daß sich das hebelartige Teil 9 nur in dem Gehäuseteil verklemmen kann, in dem das Gegenlager 14 mit einer Verzahnung 18 versehen ist. Dies geschieht immer dann, wenn der Bewegungshub infolge des Vorhandenseins eines Fremdkörpers 25 im Crimpbereich unterbrochen wird.

Das zum Gegenlager 14 weisende Ende 16 des hebelartigen Teils 9 ist ebenfalls verzahnt ausgebildet. Beide Verzahnungen 16, 18 greifen jedoch nur ineinander, wenn sich ein Hindernis 25 im Arbeitsbereich des Werkzeuges 3 befindet.

Die Verzahnung 18 geht im unteren Teil des Gegenlagers 14 in eine nutförmige Aussparung in Form einer Längsnut 19 über, deren genaue Position abhängig ist von der Höhe der Crimphülse beziehungsweise von der Endstellung 20 des Bewegungshubes, denn diese Stellung wird dann erreicht, wenn das hebelartige Teil 9 in die Längsnut 19 eingetaucht ist. Die Nuttiefe ist demnach der Länge des hebelartigen Teils 9 angepaßt. In der Endstellung 20 des Bewegungshubes liegt das hebelartige Teil 9 auf einem rollenartigen Element 24 des beweglichen Teils 4 auf, so daß es als Gegenlager zum oberen Ende der Längsnut 19 dient, an dem das hebelartige Teil 9 ebenfalls anliegt.

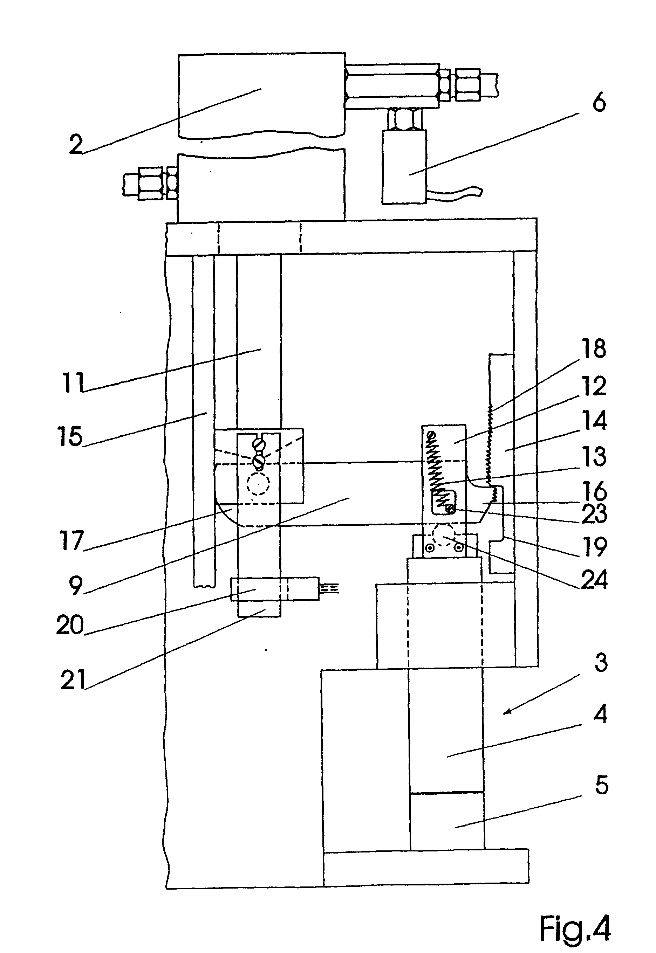

Das Ende 17 des hebelartigen Teils 9, das fest mit der Kolbenstange 11 des Pneumatikzylinders 2 verbunden ist, gleitet - entsprechend der Bewegung der Kolbenstange 11 - entlang der Innenfläche des Führungsteils 15 und ist bogenförmig ausgebildet, um alle möglichen in Bezug auf die Achse des hebelartigen Teils 9 abgewinkelten Stellungen realisieren zu können. Dabei erreicht das hebelartige Teil 9 nur dann eine nahezu waagerechte Stellung, wenn der Krafthub ausgelöst ist und das bewegliche Teil 4 auf dem festen Teil 5 aufsitzt (siehe Fig. 4).

Am kolbenstangenseitigen Ende 17 des hebelartigen Teils 9 und/oder der Kolbenstange 11 selbst ist ein Auslöseteil 21 angeordnet, daß in der absoluten Endstellung 20 des Bewegungshubes in eine Ausnehmung 22, die am induktiven Näherungssensor 7 ausgebildet ist, eingreift und damit der Steuerung signalisiert, daß der Krafthub ausgelöst werden kann.

Die Funktionsweise der Sicherheitseinrichtung 8 ist folgende:

In der Ausgangsstellung befindet sich das hebelartige Teil 9 gemäß Fig. 1 im oberen Bereich des Gehäuses 1 der Crimpmaschine. Dabei greifen die Zähne des verzahnten Endes 16 des hebelartigen Teils 9 nicht in die Verzahnung 18 des Gegenlagers 14 ein, die Kolbenstange 11 befindet sich ebenfalls in Ausgangsstellung.

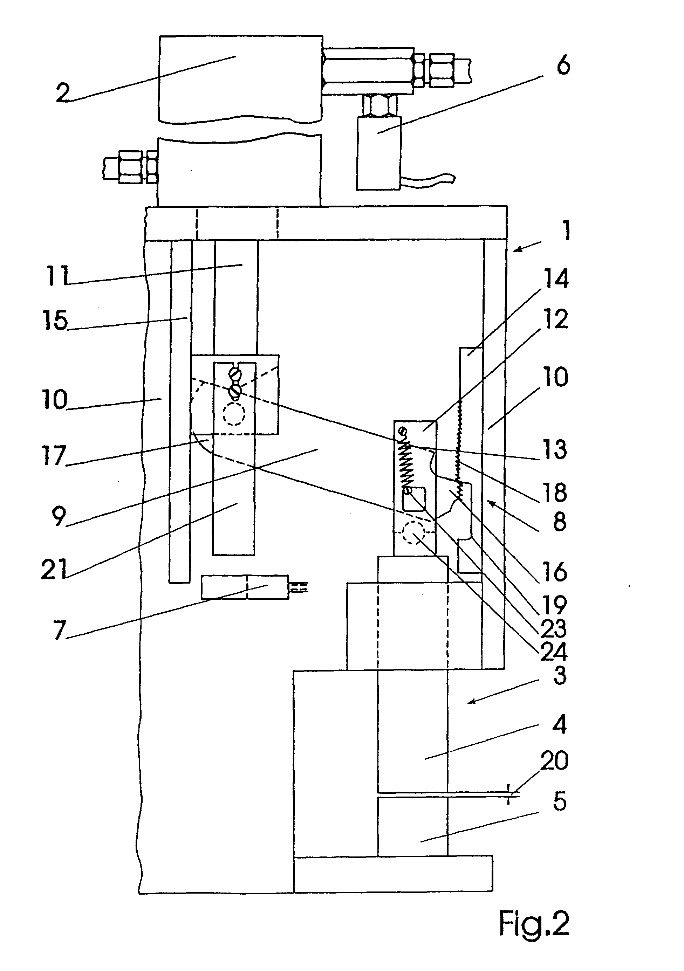

Mit Betätigung des Fußschalters wird im Druckluftzylinder 2 ein Druck aufgebaut, der maximal der Hälfte des Arbeitsdruckes entspricht. Die Kolbenstange 11 bewegt sich mit dieser minimalen Kraft nach unten. Mit ihr wird das bewegliche Teil 4 und das hebelartige Teil 9 entlang der Führungsfläche 15 nach unten geführt (Fig. 2), so weit, bis das verzahnte Ende 16 des hebelartigen Teils 9 in die Längsnut 19 des Gegenlagers 14 eintaucht und auf dem rollenartigen Element 24 des beweglichen Teils 4 aufsitzt. Jetzt ist die Endstellung des Bewegungshubes erreicht, das bewegliche Teil 4 befindet sich unmittelbar auf dem Werkstück, dem für den Crimpvorgang vorbereiteten Steckverbinder mit eingelegtem Kabel, das der Bediener der Maschine mit beiden Händen führen muß.

Kurz nach dem Erreichen der Endstellung des Bewegungshubes taucht das Auslöseteil 21 infolge der weiteren vertikalen Bewegung der Kolbenstange 11 in die Ausnehmung 22 des induktiven Näherungssensors 7 ein und löst damit das Signal "Krafthub einleiten" aus.

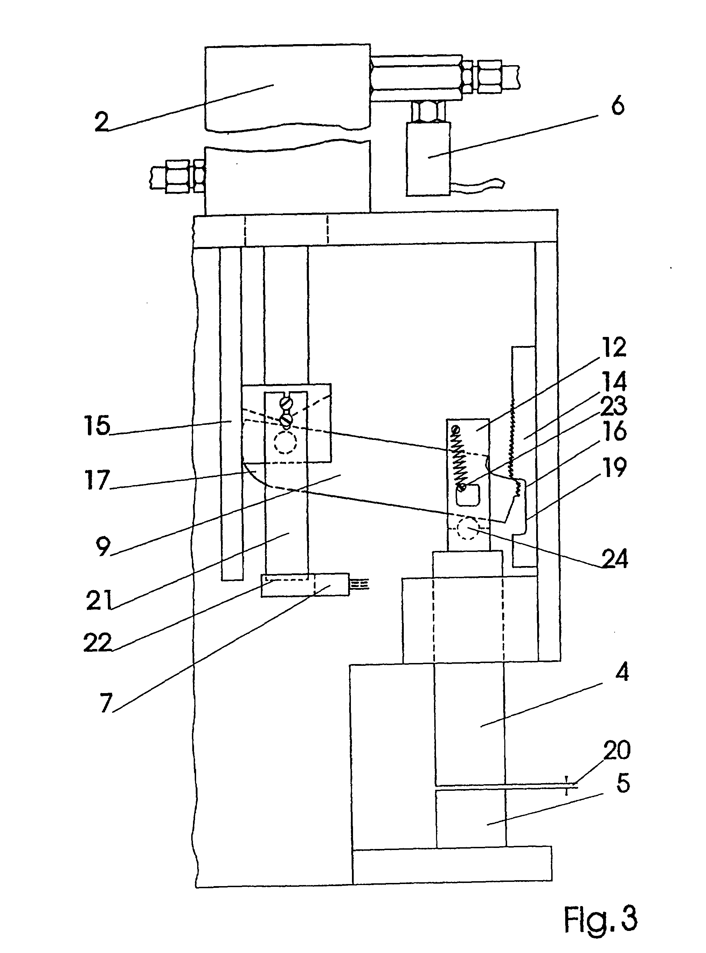

Fig. 3 veranschaulicht den Zustand der Endstellung des hebelartigen Teils 9 mit Erreichen der absoluten Endstellung 20 des Bewegungshubes. Fig. 4 zeigt die Stellung des hebelartigen Teils 9 nach ausgelöstem Krafthub, mit dem der eigentliche Crimpvorgang ausgeführt wird. Das bewegliche Teil 4 der Werkzeuganordnung 3 fährt unter einer hohen Druckkraft (maximaler Arbeitsdruck) auf den festen Teil 5 der Werkzeuganordnung 3 auf und verpreßt das Kabel zwischen Crimphülse und Steckverbinder. Die Druckkraft wird zusätzlich noch dadurch erhöht, daß das hebelartige Teil 9 nun der Kraftübersetzung dient, da die Kolbenstange 11 eine wesentlich größere vertikale Strecke zurücklegt, als es das bewegliche Teil 4 tut. Nach kurzer Zeit, die durch entsprechende Betätigung des Fußhebels, zum Beispiel bei fehlerhafter Crimpung, unterbrochen werden kann, fährt die Kolbenstange 11 in ihre Ausgangsstellung zurück, mit ihr das bewegliche Teil 4 und das hebelartige Teil 9.

Dieser Vorgang kann ständig wiederholt werden, er wird nur unterbrochen, wenn sich ein fremder Gegenstand unmittelbar im Crimpbereich befindet. Der Vorgang kann selbstverständlich auch durch Nichtbetätigen des Fußschalters unterbrochen werden.

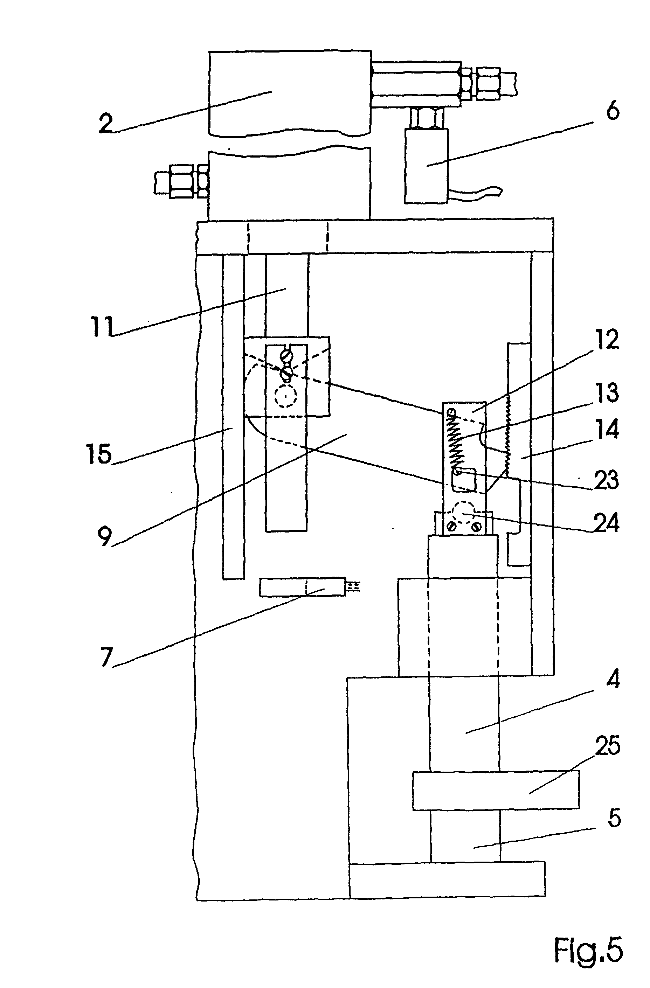

Fig. 5 veranschaulicht den Zustand, bei dem die Sicherheitseinrichtung 8 wirksam geworden ist. In diesem Falle erreicht das bewegliche Teil 4 die Position der Endstellung 20 des Bewegungshubes nicht. Hat beispielsweise der Bediener der Maschine nicht rechtzeitig die Finger aus dem Crimpbereich entfernen können, so fährt das bewegliche Teil 4 zwar auf den Finger auf. In diesem Moment tritt die Verzahnung 16, 18 in Kraft, das heißt, die Verzahnung 16 des hebelartigen Teils 9 wird in die Verzahnung 18 des Gegenlagers 14 gedrückt. Schon mit Beginn dieses Vorganges wird der Bewegungshub unterbrochen. Die federnde Befestigung des beweglichen Teils 4 verhindert, daß der weitere Bewegungshub der Kolbenstange 11 auf den Finger übertragen wird, da das vollständige Eingreifen der Zähne 16, 18, was eine weitere, wenn auch nur kleine vertikale Bewegung des beweglichen Teils 4 bedingen würde, von der Feder 13 abgefangen wird. Das Auftreffen des beweglichen Teils 4 auf das Hindernis 25 geschieht demnach schlimmstenfalls mit der Kraft des Eigengewichtes des beweglichen Teils 4 und der Zugkraft der Feder. Selbst leichte Verletzungen werden dadurch unterbunden, daß die Zugkraft der Feder 13, die so dimensioniert ist, daß sie größer als die Gewichtskraft des beweglichen Teils 4 ist. Die Druckkraft, die dabei auf den Fremdkörper 25 wirkt, ist somit die Summe aus der Gewichtskraft des beweglichen Teils 4 und der Zugkraft der Feder 13.

Gleichzeitig mit dem Eingreifen der Zähne 16 des hebelartigen Teils 9 in die des Gegenlagers 14 drückt am anderen Ende 17 des hebelartigen Teils 9 die Kolbenstange 11 des Pneumatikzylinders 2 das hebelartige Teil 9 nach unten beziehungsweise hält es in der Stellung. Das hebelartige Teil 9 verklemmt zwischen Gegenlager 14 und Führungsteil 15, die Kolbenstange 11 kann dadurch keine weitere vertikale Bewegung ausführen, der Preßvorgang ist unterbrochen.

Da aber weiterhin Druckluft dem Pneumatikzylinder 2 zugeführt wird, erfolgt ein Druckanstieg, der vom Drucksensor 6 überwacht wird. Über die Steuereinrichtung wird nun eine Umkehr der Luftrichtung im Pneumatikzylinder 2 auslöst. Dadurch wird die Kolbenstange 11 wieder nach oben bewegt, es erfolgt die Entriegelung des hebelartigen Teils 9, das sich zusammen mit dem beweglichen Teil 4 in die Ausgangsstellung zurückbewegen kann. Danach kann der Crimpvorgang durch erneute Betätigung des Fußschalters wiederholt werden.

### Bezugszeichenliste

- 1: Gehäuse
- 2: pneumatische Einrichtung
- 3: Werkzeuganordnung
- 4: bewegliches Teil
- 5: fester Teil
- 6: Drucksensor
- 7: Sensoranordnung
- 8: Sicherheitseinrichtung
- 9: hebelartiges Teil
- 10: Gehäusewand
- 11: Kolbenstange
- 12: Führungselement
- 13: Feder
- 14: Gegenlager
- 15: Führungsteil
- 16: verzahntes Endes des hebelartigen Teils
- 17: kolbenstangenseitiges Endes des hebelartigen Teils
- 18: Verzahnung
- 19: Längsnut
- 20: Endstellung des Bewegungshubes
- 21: Auslöseteil
- 22: Ausnehmung
- 23: bolzenartiges Element
- 24: rollenartiges Element
- 25: Hindernis

## Patentansprüche

1. Sicherheitseinrichtung an Umformmaschinen, insbesondere an pneumatischen Preßmaschinen und bei Durchführung kurzhubiger Preßvorgänge, zur Verhinderung des Eingreifens in den Gefahrenbereich während der Arbeitsbewegung des Werkzeuges und zur Unterbindung unbeabsichtigter Schließbewegungen, wobei die Maschine im wesentlichen aus einem Maschinengehäuse (1), einer Einrichtung (2) zur Krafterzeugung, einer Steuerung und einer Werkzeuganordnung (3) mit festem und beweglichem Teil (5, 4) und dem damit verbundenen eigentlichen Umformwerkzeug besteht, **dadurch gekennzeichnet**, daß die Sicherheitseinrichtung (8) aus einem zwischen einem Führungsteil (15) und einem Gegenlager (14) angeordneten hebelartigen Teil (9) besteht, das sowohl mit der Einrichtung zur Krafterzeugung (2) als auch mit dem beweglichen Teil (4) des Werkzeuges (3) verbunden ist, einerseits am Führungsteil (15) entlanggleitet und andererseits mit dem Gegenlager (14) so zusammenwirkt, daß jeder Arbeitshub des beweglichen Teils (4) zweistufig erfolgt, zunächst als Bewegungshub in eine vorgegebene Position (20) und nachfolgend als Krafthub zur Ausführung der Umformung, die nur dann erfolgt, wenn kein Hindernis (25) im Zwischenraum zwischen beweglichem Teil (4) und Werkstück vorhanden ist.

2. Sicherheitseinrichtung nach Anspruch 1, **dadurch gekennzeichnet**, daß das hebelartige Teil (9) so ausgebildet ist, daß es gleichzeitig der Kraftübersetzung bei Auslösung des Krafthubes dient.

3. Sicherheitseinrichtung nach Anspruch 1 und 2, **dadurch gekennzeichnet**, daß die Einrichtung zur Krafterzeugung vorzugsweise als pneumatische Einrichtung (2) ausgebildet ist, daß mit deren Kolbenstange (11) das hebelartige Teil (9) verdrehbar verbunden ist und daß eine Seitenwand (10) des Maschinengehäuses (1) als Führungsteil (15) ausgebildet und an der gegenüberliegenden Seitenwand (10) ein Gegenlager (14) angeordnet ist.

4. Sicherheitseinrichtung nach einem der Ansprüche 1 bis 3, **dadurch gekennzeichnet**, daß das Gegenlager (14) vertikal verschiebbar im Gehäuse (1) befestigt und über einen Teilbereich mit einer Verzahnung (18) und einer sich unterhalb der Verzahnung (18) befindlichen nutförmigen Aussparung (19) ausgestattet ist.

5. Sicherheitseinrichtung nach einem der Ansprüche 1 bis 4, **dadurch gekennzeichnet**, daß die Position des Gegenlagers (14) im Gehäuseinneren abhängig ist von der Größe des Abstandes zwischen beweglichem (4) und festem Teil (5) des Werkzeuges (3) vor Auslösung des Krafthubes.

6. Sicherheitseinrichtung nach einem der Ansprüche 1 bis 5, **dadurch gekennzeichnet**, daß das hebelartige Teil (9) durch Gleiten in die nutförmige Aussparung (19) im Gegenlager (14) und Aufsitzen auf einem rollenartigen Element (24) des beweglichen Teils (4) seine Endstellung (20) in der ersten Stufe des Arbeitshubes erreicht hat.

7. Sicherheitseinrichtung nach einem der Ansprüche 1 bis 6, **dadurch gekennzeichnet**, daß das bewegliche Teil (4) in der Endstellung (20) des Bewegungshubes und vor Auslösung des Krafthubes auf dem Werkstück aufsitzt.

8. Sicherheitseinrichtung nach einem der Ansprüche 1 bis 7, **dadurch gekennzeichnet**, daß das hebelartige Teil (9) so angeordnet ist, daß es nur bei Nichterreichen der Endposition (20) des Bewegungshubes infolge eines Hindernisses im Arbeitsbereich des Werkzeuges (3) in die Verzahnung (18) des Gegenlagers (14) eingreift und zwischen Gegenlager (14) und Führungsteil (15) verklemmt.

9. Sicherheitseinrichtung nach einem der Ansprüche 1 bis 8, **dadurch gekennzeichnet**, daß das hebelartige Teil (9) und das bewegliche Teil (4) federnd miteinander verbunden sind.

10. Sicherheitseinrichtung nach einem der Ansprüche 1 bis 9, **dadurch gekennzeichnet**, daß der innere Abstand zwischen Gegenlager (14) und Führungsteil (15) im Bereich der Verzahnung (18) kleiner ist als die Länge des hebelartigen Teils (9).

11. Sicherheitseinrichtung nach einem der Ansprüche 1 bis 10, **dadurch gekennzeichnet**, daß am kolbenstangenseitigen Ende (17) des hebelartigen Teils (9) ein Auslöseteil (21) befestigt ist, das in der Endposition (20) des Bewegungshubes mit einer Anordnung (7) zur Auslösung des Krafthubes zusammenwirkt.

12. Sicherheitseinrichtung nach Anspruch 11, **dadurch gekennzeichnet**, daß die Anordnung zur Auslösung des Krafthubes aus einem induktiven Näherungssensor (7) besteht, der so im Gehäuse (1) angeordnet ist, daß er mit dem Auslöseteil (21) nur dann zusammenwirkt, wenn das hebelartige Teil (9) in die nutförmige Aussparung (19) im Gegenlager (14) eingetaucht ist.

13. Sicherheitseinrichtung nach einem der Ansprüche 1 bis 12, **dadurch gekennzeichnet**, daß zur Überwachung des Druckluftaufbaus in der pneumatischen Einrichtung (2) ein Drucksensor (6) angeordnet ist, der mit dem induktiven Näherungssenor (7) über die Steuerung zusammenwirkt.

14. Sicherheitseinrichtung nach einem der Ansprüche 1 bis 13, **dadurch gekennzeichnet**, daß die pneumatische Einrichtung (2) für den Bewegungshub nur ca. 50% des zur Verfügung stehenden Arbeitsdruckes benötigt und erst bei ausgelöstem Krafthub den vollen Arbeitsdruck bereitstellt.

15. Sicherheitseinrichtung nach einem der Ansprüche 1 bis 14, **dadurch gekennzeichnet**, daß bei Vorhandensein eines Hindernisses (25) im unmittelbaren Arbeitsbereich des Umformwerkzeuges (3) der ausgelöste Arbeitshub während des Bewegungshubes abgebrochen und das bewegliche Teil (4) und das hebelartige Teil (9) in die Ausgangsstellung zurückgeführt werden.

## Claims

1. Safety device on metal-forming machines, in particular on pneumatic press machines and where short-stroke press operations are performed, for preventing intervention in the danger area during the working motion of the tool and for preventing unintentional closing motions, the machine essentially comprising a machine housing, a power-generating device, a control and a tool arrangement having a fixed part and a movable part and the actual metal-forming tool connected thereto, characterized in that the safety device (8) consists of a lever-like part (9), which is arranged between a guide part (15) and an abutment (14) and is connected to both the power-generating device (2) and the movable part (4) of the tool (3), slides along the guide part (15) on the one side and interacts with the abutment (14) on the other side in such a way that each working stroke of the movable part (4) is effected in two stages, first of all as a motion stroke into a predetermined position (20) and then as a power stroke for carrying out the metal-forming operation, which is only effected when there is no obstacle (25) in the intermediate space between movable part (4) and workpiece.

2. Safety device according to Claim 1, characterized in that the lever-like part (9) is designed in such a way that it serves at the same time to transmit power when the power stroke is initiated.

3. Safety device according to Claims 1 and 2, characterized in that the power-generating device is preferably designed as a pneumatic device (2), in that the lever-like part (9) is rotatably connected to its piston rod (11), and in that one side wall (10) of the machine housing (1) is designed as guide part (15) and an abutment (14) is arranged on the opposite side wall (10) .

4. Safety device according to one of Claims 1 to 3, characterized in that the abutment (14) is fastened in the housing (1) in such a way as to be vertically displaceable and is provided with a tooth system (18) over a section and with a groove-shaped recess (19) located below the tooth system (18).

5. Safety device according to one of Claims 1 to 4, characterized in that the position of the abutment (14) in the housing interior depends on how large the distance is between movable part (4) and fixed part (5) of the tool (3) before the power stroke is initiated.

6. Safety device according to one of Claims 1 to 5, characterized in that the lever-like part (9), by sliding into the groove-shaped recess (19) in the abutment (14) and sitting on a roller-like element (24) of the movable part (4), has reached its end position (20) in the first stage of the working stroke.

7. Safety device according to one of Claims 1 to 6, characterized in that the movable part (4) sits on the workpiece in the end position (20) of the motion stroke and before the power stroke is initiated.

8. Safety device according to one of Claims 1 to 7, characterized in that the lever-like part (9) is arranged in such a way that it meshes with the tooth system (18) of the abutment (14) and jams between abutment (14) and guide part (15) only if the end position (20) of the motion stroke is not reached as a result of an obstacle in the working region of the tool (3).

9. Safety device according to one of Claims 1 to 8, characterized in that the lever-like part (9) and the movable part (4) are connected to one another in a spring-loaded manner.

10. Safety device according to one of Claims 1 to 9, characterized in that the internal distance between abutment (14) and guide part (15) in the region of the tooth system (18) is less than the length of the lever-like part (9).

11. Safety device according to one of Claims 1 to 10, characterized in that a release part (21) is fastened to the piston-rod-side end (17) of the lever-like part (9), which release part (21), in the end position (20) of the motion stroke, interacts with an arrangement (7) for initiating the power stroke.

12. Safety device according to Claim 11, characterized in that the arrangement for initiating the power stroke consists of an inductive proximity sensor (7), which is arranged in the housing (1) in such a way that it interacts with the release part (21) only when the lever-like part (9) has plunged into the groove-shaped recess (19) in the abutment (14).

13. Safety device according to one of Claims 1 to 12, characterized in that a pressure sensor (6), which interacts with the inductive proximity sensor (7) via the control, is arranged in order to monitor the buildup of compressed air in the pneumatic device (2).

14. Safety device according to one of Claims 1 to 13, characterized in that the pneumatic device (2) requires only about 50% of the available working pressure for the motion stroke and does not provide the full working pressure until the power stroke is initiated.

15. Safety device according to one of Claims 1 to 14, characterized in that, if there is an obstacle (25) in the immediate working region of the metal-forming tool (3), the initiated working stroke is stopped during the motion stroke and the movable part (4) and the lever-like part (9) are returned into the initial position.

## Revendications

1. Le dispositif de sécurité sur les machines-outils de formage, en particulier sur les presses pneumatiques et lors de l'exécution de cycles de moulage à faible course, pour éviter d'être entraîné dans la partie dangereuse pendant le mouvement de travail de l'outil et pour empêcher les mouvements de fermeture incontrôlés, sachant que la machine se compose principalement d'un carter de machine, d'un dispositif pour la production d'énergie, d'une commande et d'une disposition d'outillage avec une partie fixe et une partie mobile et l'outil de formage proprement dit qui y est relié, caractérisé en ce que le dispositif de sécurité (8) se compose d'une pièce (9) en forme de levier, située entre une pièce de guidage (15) et une butée (14), qui est reliée au dispositif de production d'énergie (2) ainsi qu'à la pièce mobile (4) de l'outil (3), d'une part accompagnant la pièce de guidage (15) sur sa longueur et d'autre part agissant avec la butée (14) de sorte que chaque course de travail de la pièce mobile (4) se fait en deux temps, en premier lieu comme course de mouvement dans une position prédéterminée (20) et ensuite comme course de force pour exécuter le formage qui alors ne se fait que s'il n'y a aucun obstacle (25) dans l'espace intermédiaire entre la pièce mobile (4) et la pièce d'usinage.

2. Dispositif de sécurité selon la revendication 1 caractérisé en ce que la pièce en forme de levier (9) est conçue de sorte qu'elle sert en même temps à la transmission de la force lors du déclenchement de la course de force.

3. Dispositif de sécurité selon les revendications 1 et 2 caractérisé en ce que le dispositif pour la production d'énergie est de préférence conçu comme un dispositif pneumatique (2), en ce que la pièce en forme de levier (9) est reliée avec la tige de piston (11) de ce dispositif de manière à pouvoir se tordre et en ce qu'une paroi latérale (10) du carter de la machine (1) est conçue comme une pièce de guidage (15) et que la paroi latérale opposée (10) comporte une butée (14).

4. Dispositif de sécurité selon l'une quelconque des revendications 1 à 3 caractérisé en ce que la butée (14) est fixée verticalement de façon amovible dans le carter (1) et qu'elle comporte, au-dessus d'une partie, une denture (18) et un évidement (19) en forme de rainure localisé en-dessous de la denture (18).

5. Dispositif de sécurité selon l'une quelconque des revendications 1 à 4 caractérisé en ce que la position de la butée (14) à l'intérieur du carter dépend de la taille de l'intervalle entre la pièce mobile (4) et la pièce fixe (5) de l'outil (3) avant le déclenchement de la course de force.

6. Dispositif de sécurité selon l'une quelconque des revendications 1 à 5 caractérisé en ce que la pièce en forme de levier (9) a atteint en glissant dans l'évidement en forme de rainure (19) dans la butée (14) et en se logeant sur un élément en forme de rouleau (24) de la pièce mobile (4) sa position finale (20) lors de la première étape de la course de travail.

7. Dispositif de sécurité selon l'une quelconque des revendications 1 à 6 caractérisé en ce que la pièce mobile (4) est logée sur l'outil dans la position finale (20) de la course de mouvement et avant le déclenchement de la course de force.

8. Dispositif de sécurité selon l'une quelconque des revendications 1 à 7 caractérisé en ce que la pièce en forme de levier (9) est disposée de sorte qu'elle ne s'enclenche dans la denture (18) de la butée (14) et qu'elle ne se bloque entre la butée (14) et la pièce de guidage (15) que si la position finale (20) de la course de mouvement n'est pas atteinte du fait d'un empêchement dans la zone de travail de l'outil (3).

9. Dispositif de sécurité selon l'une quelconque des revendications 1 à 8 caractérisé en ce que la pièce en forme de levier (9) et la pièce mobile (4) sont assemblées l'une à l'autre de manière élastique.

10. Dispositif de sécurité selon l'une quelconque des revendications 1 à 9 caractérisé en ce que l'intervalle intérieur entre la butée (14) et la pièce de guidage (15) dans la partie de la denture (18) est inférieur à la longueur de la pièce en forme de levier (9).

11. Dispositif de sécurité selon l'une quelconque des revendications 1 à 10 caractérisé en ce qu'une pièce de déclenchement (21) est fixée sur l'extrémité côté tige de piston (17) de la pièce en forme de levier (9) et qu'elle agit avec un système (7) de déclenchement de la course de force dans la position finale (20) de la course de mouvement.

12. Dispositif de sécurité selon la revendication 11 caractérisé en ce que le système de déclenchement de la course de force se compose d'un capteur de proximité inductif (7) qui est positionné dans le carter (1) de sorte qu'il agit avec la pièce de déclenchement (21) uniquement si la pièce en forme de levier (9) est immergée dans l'évidement en forme de rainure (19) dans la butée (14).

13. Dispositif de sécurité selon l'une quelconque des revendications 1 à 12 caractérisé en ce que, pour surveiller la montée en pression dans le dispositif pneumatique (2), il y a un manomètre (6) qui agit avec le capteur de proximité inductif (7) par l'intermédiaire de la commande.

14. Dispositif de sécurité selon l'une quelconque des revendications 1 à 13 caractérisé en ce que le dispositif pneumatique (2) n'a besoin pour la course de mouvement que de 50 % environ de la pression de travail qui est disponible et qu'il prépare la pression de travail complète uniquement lorsque la course de la force est déclenchée.

15. Dispositif de sécurité selon l'une quelconque des revendications 1 à 14 caractérisé en ce que, en la présence d'un obstacle (25) dans la zone de travail directe de l'outil de formage (3), la course de travail déclenchée pendant la course de mouvement est interrompue et que la pièce mobile (4) et la pièce en forme de levier (9) sont ramenées dans la position initiale.
